# EUROPÄISCHE PATENTSCHRIFT

(11) **EP 1 113 946 B1**
(45) Veröffentlichungstag und Bekanntmachung des Hinweises auf die Patenterteilung: **23.10.2002**
(21) Anmeldenummer: 99953631.1
(22) Anmeldetag: 31.08.1999
(51) Int. Cl.: B60R 13/08, G10K 11/168, B32B 15/02, B32B 15/08, B32B 33/00

(54) **GEKLEBTE MEHRSCHICHTVERBUNDPLATTEN UND VERFAHREN ZUR HERSTELLUNG VON MEHRSCHICHTVERBUNDPLATTEN**
BONDED MULTI-LAYER COMPOSITE PLATES AND A METHOD FOR PRODUCING MULTI-LAYER COMPOSITE PLATES
PANNEAUX COMPOSITES MULTICOUCHES COLLES ET LEUR PROCEDE DE PRODUCTION

(30) Priorität: 02.09.1998 DE 19839931
(43) Veröffentlichungstag der Anmeldung: 11.07.2001
(73) Patentinhaber: DaimlerChrysler AG, 70567 Stuttgart (DE)
(72) Erfinder: KOPP, Reiner, D-52074 Aachen (DE); GERICK, Arndt, D-89075 Ulm (DE); LEMPENAUER, Klaus, D-89075 Ulm (DE); WINKLER, Peter, D-85521 Ottobrunn (DE)
(86) Internationale Anmeldenummer: DE9902714
(87) Internationale Veröffentlichungsnummer: WO00013890

(56) Entgegenhaltungen:
- EP-A- 0 636 517
- DE-A- 3 033 692
- DE-A- 3 905 871
- US-A- 4 311 541
- US-A- 4 461 796
- US-A- 5 455 096

## Beschreibung

Die Erfindung bezieht sich auf Mehrschichtverbundplatten nach dem Oberbegriff des Patentanspruchs 1 und auf ein Verfahren zur Herstellung von Mehrschichtverbundplatten nach dem Oberbegriff des Patentanspruchs 5.

Mehrschichtverbundplatten und Verfahren zur Herstellung von Mehrschichtverbundplatten finden im Leichtbau ein breites Anwendungsgebiet.

Vor allem in der Verkehrstechnik werden spezifisch leichte Werkstoffe, wie beispielsweise Aluminium oder Faserverbundkunststoffe oder auch hochfeste Karosseriestähle, bevorzugt eingesetzt. Allerdings kann durch den Einsatz von immer höherfesten Werkstoffen mit zunehmend dünneren Blechstärken zwar die Festigkeitsanforderung erfüllt werden, nicht jedoch die Steifigkeit. Leichtbau stößt vor allem dort an Grenzen, wo geometrisch bedingt durch reduzierte Querschnitte die Bauteilsteifigkeit den Anforderungen nicht mehr genügt.
Eine Lösung bieten geometrische Versteifungen bei niedrigem Flächengewicht, die sogenannte hohe spezifische Steifigkeit. Derartige Mehrschichtverbunde sind bereits in vielfältigen Varianten als Stegbleche, Höcker- und Trapez-Verbundbleche bekannt, bei denen verschiedene, durch Umformung hergestellte Geometrien mit einer innenliegenden stützenden Zwischenlage die Grundlage für technische Lösungen im Leichtbau bilden. Als Zwischenlage eignen sich auch Schaumkernfüllungen mit polymeren Schäumen oder auch metallische Schäume, bis hin zu Kieselgurfüllungen.
Bevorzugte technische Anwendungen findet heute vor allem ein dreischichtiger Werkstoffverbund aus zwei Stahldeckblechen und einer Zwischenschicht aus viskoelastischem Material. Diese Art von Verbundblechen werden aufgrund ihrer relativ dünnen Zwischenschicht, die auch kaum zur Steifigkeitserhöhung beiträgt, hauptsächlich wegen ihrer schwingungsdämpfenden Eigenschaften herangezogen.

Außerdem ist aus der gattungsgemässen DE 39 35 120 C2 ein Verfahren zur Herstellung von Mehrschichtverbundplatten bekannt, die aus einer Deck- und Bodenplatte und dazwischenliegend aus einem Stegmaterial aus Draht besteht, das an den Gitterknotenpunkten verschweißt oder verklebt wird. Zwar werden im Verfahrensablauf gegebenenfalls die Gitterknotenpunkte der Zwischenlage flach gewalzt, wobei sich eine größere Auflagefläche zur Deck- und Bodenplatte ausbildet, jedoch können insbesondere die Verbindungsstellen in weit von der neutralen Ebene entfernten Positionen bei einer Umformung dennoch zu stark durch Schubkräfte beansprucht werden und dabei reißen. Sobald im Umformprozeß derart beschädigte Verbindungsstellen auch nur geringfügig auseinanderdriften, werden diese bei flächenhaften Klebern auch durch weitere Prozeßschritte nicht mehr verbunden. Als Faustregel gilt dabei für die Umformbarkeit, daß je höher die sog. gewichtsspezifische Steifigkeit einer Struktur ist, desto enger sind die Grenzen, aus einer ebenen Verbundstruktur ein gekrümmtes Bauteil zu formen. Dies gilt prinzipiell auch für Gitter- und Streckmetallverbunde, wo durch das Zusammendrücken der Zwischenlage beim umformen, das Durchprägen der Zwischenlagenstruktur auf die Deckbleche bis hin zum Aufreißen der Deckbleche der Grad der Umformbarkeit beschränkt ist.

Bei den in der Schrift EP 0 636 517 B1 durch ein Herstellungsverfahren beschriebenen komplexeren Strukturen werden die einzelnen Schichten in Mehrschichtverbundplatten mit Dämmschichtzwischenlage mit Hilfe eines Klebers fixiert und gemeinsam umgeformt. Der Schwerpunkt liegt hier besonders auf dem gezielten Umformen von Fahrzeugkarosserieteilen, bei denen mit partiell angebrachten Schweiß- oder Klebeverbindungen ein gewünschtes Umformverhalten erzielt wird und dabei erst in zweiter Linie ein Erreichen möglichst hoher Steifigkeit angestrebt wird. Aber auch in diesem Fall weisen die Mehrschichtverbundplatten die bereits genannten Nachteile auf.

Der Erfindung liegt die Aufgabe zugrunde, eine der Umformung zugängliche Mehrschichtverbundplatte sowie ein Verfahren zur Herstellung derselben anzugeben, wodurch in ihrer Materialeigenschaft optimale Steifigkeit in Verbindung mit Korrosionsschutz und einer Schwingungs- und Schalldämpfung erreicht wird.

Die Erfindung wird in Bezug auf die Anordnung durch die Merkmale des Patentanspruchs 1 und in Bezug auf das Verfahren durch die Merkmale des Patentanspruchs 5 wiedergegeben. Die weiteren Ansprüche enthalten vorteilhafte Aus- und Weiterbildungen der Erfindung.

Die Erfindung beinhaltet Mehrschichtverbundplatten, welche aus zwei äußeren Metalltafeln als Deckel- und Bodenplatte besteht, die mit einem zwischenliegendem verformbaren Stegmaterial verbunden sind. Dabei sind Deckel- und Bodenplatte mittels aufschäumendem Kleber mit dem Stegmaterial verbunden, der die im Verbund verbleibenden Hohlräume ausfüllt.
Das zwischenliegende Stegmaterial besteht bevorzugt aus einem Streckmetallgitter, einem Drahtgitter oder einem Stegblech.
Es kann aber auch aus einer mehrlagigen Abfolge aus Streckmetallgittern, Drahtgittern. Stegblechen mit für den Kleber durchlässigen oder undurchlässigen Zwischenblechen aufgebaut sein.
Die im Verbund verbleibenden Hohlräume sind vollständig oder partiell durch den Kleber ausgeschäumt.

Das Verfahren zur Herstellung von Mehrschichtverbundplatten beinhaltet, daß zwischen die zu verbindenden Lagen Kleber eingebracht und der Kleber einer thermischen Behandlung unterzogen wird.
Zwischen den Lagen wird der Kleber in Form von Folienzwischenlagen oder in flüssiger Form verwendet.

Durch die thermische Behandlung wird der Kleber vollständig oder teilweise ausgehärtet. Im Falle des teilweise ausgehärteten Klebers wird erst nach einem Umformvorgang der Mehrschichtverbundplatte der Kleber durch eine weitere thermische Behandlung vollständig ausgehärtet.

Ein besonderer Vorteil der Erfindung besteht in der exzellenten Umformbarkeit der mehrlagigen Verbundstruktur. Innerhalb des Werkstücks sorgt ein fließenden Spannungsübergang für zusätzliche vorteilhafte Werkstoffeigenschaften der durch die Umformung gebildeten hochsteifen Struktur im Gebrauchszustand.
Zudem wird durch eine Auskleidung der innenliegenden Metalloberfläche durch den aufschäumenden Kleber ein wirkungsvoller Schutz vor Korrosion bewirkt.
Ein weiterer Vorteil ergibt sich aus einer Verbesserung im Dämpfungsverhalten von Schall und Vibration und bezüglich der thermischen Dämmung.

Im folgenden wird die Erfindung anhand von vorteilhaften Ausführungsbeispielen unter Bezugnahme auf schematische Zeichnungen in den Figuren näher erläutert. Es zeigen:
- Fig. 1A: Prinzipieller Aufbau einer Mehrschichtverbundplatte mit Streckmetallstegmaterial,
- Fig. 1B: Aufbau des Streckmetallstegmaterials,
- Fig. 2: Kraft-Weg-Diagramm von Verbundblechen mit ausgehärtetem Kleber im Vergleich mit Massivblechen gleicher Blechstärke,
- Fig. 3A: Darstellung eines fließenden Spannungsübergangs bei Verwendung von aufschäumenden Klebern,
- Fig. 3B: Darstellung eines Spannungsübergangs ohne aufschäumende Kleber.

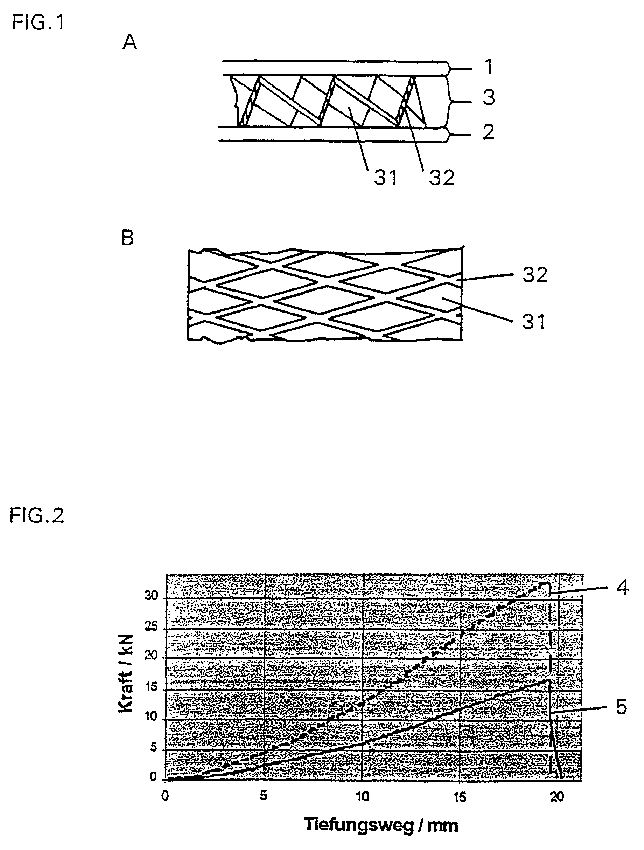

In einem ersten Ausführungsbeispiel gemäß Fig. 1 wird ein Streckmetallgitter 32 als Zwischenlage zwischen einem Deck- und Bodenblech verwendet. Das Streckmetallgitter 32 wird aus Blechtafeln oder -bändern gefertigt, indem das Blech versetzt geschnitten und gleichzeitig unter streckender Beanspruchung verformt und zu einer gitterförmigen Matte aufgezogen wird. Die Herstellung, die bereits in großem Umfang Verwendung findet, erfolgt ohne Materialverlust in einem Arbeitsschritt. Eine bevorzugte Verwendung beruht darauf, daß es im Vergleich zu anderen als Zwischenlage verwendeten Waben-, Steg-, oder Gitterstrukturen billig in der Herstellung und leicht verfügbar ist. Zudem ist durch eine breite Auswahlmöglichkeit des Werkstoffs (z.B. Karosseriestähle, Edelstähle, Aluminiumlegierungen) als auch der Gittergeometrie (Maschenweite, Steghöhe, Stegbreite) die benötigte Variabilität des Materials in der Verwendung als Zwischenlage gewährleistet. Die Variabilität in der Geometrie besitzt nicht zuletzt einen wesentlichen Einfluß auf die Eigenschaften der Verbundstruktur und insbesondere deren Verformbarkeit.

Ein weiterer wesentlicher Bestandteil der Mehrschichtverbundplatte, der maßgeblich das Umformverhalten bestimmt, ist der Kleber. In diesen Strukturen wird eine Fügung von Deckelblech 1, Stegmaterial 3 als Zwischenlage und Bodenblech 2 mit einem aufschäumenden Klebstoff durchgeführt.. Dabei sind neben pastösen Klebstoffen, die während der thermischen Aushärtung aufquellen insbesondere Folienklebstoffe angedacht, die sehr gleichmäßig aufgebracht werden können und während der thermischen Aushärtung dementsprechend gleichmäßig aufschäumen. Durch den aufgeschäumten Klebstoff wird das Umformvermögen der Verbundstruktur derart erhöht, daß die Mehrschichtverbundplatte auch noch im Anschluß an eine Aushärtung einem Umformprozeß unterzogen werden kann.

In Fig. 2 ist beispielhaft in einem Kraft-Weg-Diagramm das Umformvermögen einer Mehrschichtverbundplatte mit ausgehärtetem Kleber 4 im Vergleich zum Massivblech gleicher Stärke 5 dargestellt. Aus dem Diagramm zeigt sich im Dehnungsverhalten entlang der Abszisse, daß die Umformbarkeit des Verbundes sogar identisch mit der Umformbarkeit des entsprechenden Massivbleches gleicher Stärke ist. Dabei entsteht eine hochsteife Struktur im umgeformten Gebrauchszustand.

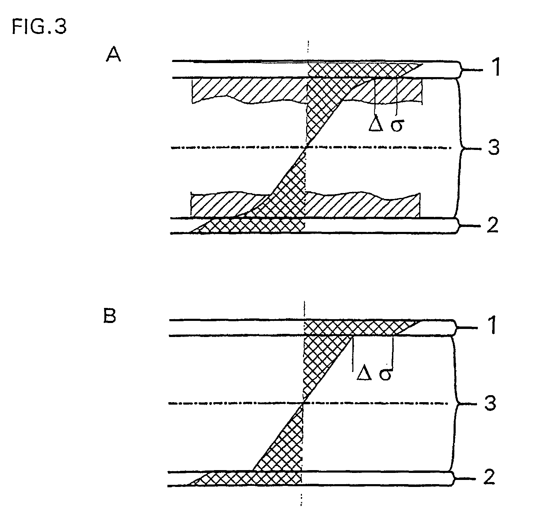

Der Klebstoff füllt während des Ausschäumens die Hohlräume der Verbundstruktur weitgehend aus und bildet damit eine zusätzliche Verankerungsschicht, die bei einer Belastung der Mehrschichtverbundplatte zu einem fließenden Spannungsübergang Δσ und demzufolge zu einer höheren Belastbarkeit führt.
Diese zusätzliche und in anderen Verbindungstechniken des Standes der Technik, wie in Fig.3B dargestellt ist, nicht zu erzielende vorteilhafte Werkstoffeigenschaft dieser Verbundstruktur ist in Fig.3A illustriert. Die Fig.3A zeigt im Spannungsverlauf im Werkstück den Mechanismus des fließenden Spannungsübergangs in den Übergangsbereichen von Stegmaterial 3 und Deck- 1 bzw. Bodenblech 2 zur Werkstückaußenseite hin.
Außerdem entsteht ein wichtiger Zusatznutzen, indem die Verklebung von korrosionsanfälligen Werkstoffen der aufschäumende Klebstoff eine Korrosionsschutzfunktion übernimmt. Das innenseitige Abdecken von Deck- 1 und Bodenblechen 2 durch die Klebemasse und das ganzflächige Umschließen des Streckmetallgitters 31 verhindert die Korrosion der Verbundstruktur. Dies ist insbesondere von Bedeutung, weil die fertige Verbundstruktur Hohlräume 31 beinhaltet, die durch keine praktikablen Korrosionsschutzmaßnahmen, wie beispielsweise Verzinken oder Lackieren, schützbar sind. Dabei ist nicht unbedingt erforderlich, daß die Hohlräume 31 vollständig ausgeschäumt werden, sondern lediglich bis zur vollständigen Bedeckung der innenliegenden freien Oberfläche.

In einem weiteren Ausführungsbeispiel wird als Stegmaterial 3 eine mehrlagige Abfolge aus Streckmetallgittern, Drahtgittern, Stegblechen mit fiir den Kleber durchlässigen oder undurchlässigen Zwischenblechen verwendet. Die Zwischenlagen werden nach den auf spezielle Umformeigenschaften ausgerichteten Erfordernissen aufgebaut. Dabei erfüllen undurchlässige und durchlässige Zwischenblechlagen die Funktion, den aufschäumenden Kleber gezielt innerhalb der nicht zugänglichen Hohlräume für eine erweiterte Funktionalität einzubringen.

## Patentansprüche

1. Mehrschichtverbundplatten, welche aus zwei äußeren Metalltafeln als Deckel- (1) und Bodenplatte (2) besteht, die mit einem zwischenliegenden verformbaren Stegmaterial (3) verbunden sind,
**dadurch gekennzeichnet,**
- **daß** Deckel- (1) und Bodenplatte (2) mittels aufschäumendem Kleber mit dem Stegmaterial verbunden sind, der die im Verbund verbleibenden Hohlräume (31) ausfüllt und
- **daß** das zwischenliegende Stegmaterial (3) aus einem Streckmetallgitter (32), einem Drahtgitter oder einem Stegblech besteht.

2. Mehrschichtverbundplatten nach Anspruch 1, **dadurch gekennzeichnet, daß** das zwischenliegende Stegmaterial (3) aus einer mehrlagigen Abfolge aus Streckmetallgittern, Drahtgittem, Stegblechen mit für den Kleber durchlässigen oder undurchlässigen Zwischenblechen besteht.

3. Mehrschichtverbundplatten nach Anspruch 1 oder 2, **dadurch gekennzeichnet, daß** die im Verbund verbleibenden Hohlräume (31) vollständig oder partiell durch den Kleber ausgeschäumt sind.

4. Verfahren zur Herstellung von Mehrschichtverbundplatten nach einem der vorhergehenden Ansprüche 1 bis 3, **dadurch gekennzeichnet, daß** zwischen die zu verbindenden Lagen Kleber eingebracht und der Kleber einer thermischen Behandlung unterzogen wird.

5. Verfahren zur Herstellung von Mehrschichtverbundplatten nach Anspruch 4, **dadurch gekennzeichnet, daß** zwischen den Lagen der Kleber in Form von Folienzwischenlagen oder in flüssiger Form verwendet wird.

6. Verfahren zur Herstellung von Mehrschichtverbundplatten nach Anspruch 4 oder 5, **dadurch gekennzeichnet, daß** durch die thermische Behandlung der Kleber vollständig oder teilweise ausgehärtet wird.

7. Verfahren zur Herstellung von Mehrschichtverbundplatten mit teilweise ausgehärtetem Kleber nach einem der Ansprüche 4 bis 6, **dadurch gekennzeichnet, daß** erst nach einem Umformvorgang der Mehrschichtverbundplatten der Kleber durch eine weitere thermische Behandlung vollständig ausgehärtet wird.

## Claims

1. Multilayer composite plates, which comprise two outer metal panels as cover plate (1) and base plate (2) which are connected by a deformable web material (3) which is located between them,
**characterized**
- **in that** the cover plate (1) and base plate (2) are joined to the web material by means of foamable adhesive which fills the cavities (31) which remain in the composite, and
- **in that** the web material (3) which lies between the plates comprises an expanded-metal grid (32), a wire grid or a web metal sheet.

2. Multilayer composite plates according to Claim 1, **characterized in that** the web material (3) which lies between the plates comprises a multi-layered sequence of expanded-metal grids, wire grids, web metal sheets with intermediate metal sheets which are permeable or impermeable to the adhesive.

3. Multilayer composite plates according to Claim 1 or 2, **characterized in that** the cavities (31) which remain in the composite are completely or partially filled by the foaming of the adhesive.

4. Process for producing multilayer composite plates according to one of the preceding Claims 1 to 3, **characterized in that** adhesive is introduced between the layers which are to be joined and the adhesive is subjected to a heat treatment.

5. Process for producing multilayer composite plates according to Claim 4, **characterized in that** the adhesive between the layers is used in the form of film interlayers or in liquid form.

6. Process for producing multilayer composite plates according to Claim 4 or 5, **characterized in that** the adhesive is completely or partly cured by the heat treatment.

7. Process for producing multilayer composite plates with partially cured adhesive according to one of Claims 4 to 6, **characterized in that** the adhesive is only fully cured by means of a further heat treatment, after a deforming operation has been carried out on the multilayer composite plates.

## Revendications

1. Panneaux composites multicouches constitués de deux feuilles métalliques externes en tant que plaque de couverture (1) et plaque de fond (2), lesquelles sont reliées à un matériau d'âme intermédiaire déformable (3), **caractérisés en ce que** la plaque de couverture (1) et la plaque de fond (2) sont reliées au matériau d'âme au moyen d'une colle expansive, laquelle remplit les cavités (31) subsistant dans le composite, et **en ce que** le matériau d'âme intermédiaire (3) est constitué d'un treillis en métal déployé (32), d'un treillis en fils de fer ou d'une tôle d'âme.

2. Panneaux composites multicouches selon la revendication 1, **caractérisés en ce que** le matériau d'âme intermédiaire (3) est constitué d'une succession de couches de treillis en métal déployé, de treillis en fils de fer, de tôles d'âme comportant des tôles intermédiaires perméables ou imperméables à la colle.

3. Panneaux composites multicouches selon la revendication 1 ou 2, **caractérisés en ce que** les cavités (31) subsistant dans le composite sont entièrement ou partiellement comblées par la colle expansive.

4. Procédé de fabrication de panneaux composites multicouches selon l'une quelconque des revendications 1 à 3 précédentes, **caractérisé en ce que** de la colle est introduite entre les couches à relier et **en ce que** la colle est soumise à un traitement thermique.

5. Procédé de fabrication de panneaux composites multicouches selon la revendication 4, **caractérisé en ce que** la colle introduite entre les couches se présente sous la forme de couches intermédiaires en feuilles ou sous forme liquide.

6. Procédé de fabrication de panneaux composites multicouches selon la revendication 4 ou 5, **caractérisé en ce que** la colle est durcie entièrement ou partiellement suite au traitement thermique.

7. Procédé de fabrication de panneaux composites multicouches comportant une colle partiellement durcie selon l'une quelconque des revendications 4 à 6, **caractérisé en ce qu'**après un procédé de formage des panneaux composites multicouches, la colle est seulement entièrement durcie suite à un autre traitement thermique.
